# EUROPEAN PATENT SPECIFICATION

(11) **EP 4 220 045 B1**
(45) Date of publication and mention of the grant of the patent: **13.05.2026**
(21) Application number: 23153746.5
(22) Date of filing: 27.01.2023
(51) Int. Cl.: F25D 3/10, F25D 31/00, A23B 7/055, B01F 25/31

(54) **PLANT FOR CONTINUOUSLY COOLING FOODSTUFFS THROUGH CRYOGENIC LIQUID GAS**
ANLAGE ZUR KONTINUIERLICHEN KÜHLUNG VON LEBENSMITTELN DURCH KRYOGENES FLÜSSIGGAS
INSTALLATION DE REFROIDISSEMENT EN CONTINU DE PRODUITS ALIMENTAIRES PAR GAZ CRYOGÉNIQUE LIQUIDE

(30) Priority: 01.02.2022 IT 202200001718
(43) Date of publication of application: 02.08.2023
(73) Proprietor: Air Liquide Italia S.p.A., 20158 Milano (MI) (IT); Siprem International S.p.A., 61122 Pesaro (PU) (IT)
(72) Inventor: FABIANI, Andrea, 61122 Pesaro (PU) (IT); BERTO, Roberto, 44122 Ferrara (FE) (IT); FRANCA, Franco, 61122 Pesaro (PU) (IT); RUOSI, Daniela, 20137 Milano (MI) (IT)
(74) Representative: Ripamonti, Enrico

(56) References cited:
- CN-A- 113 115 895
- US-A1- 2006 283 195
- US-A1- 2011 296 853
- US-A1- 2019 054 430
- US-A1- 2020 060 318
- US-B2- 6 804 965

## Description

Forming an object of the present invention is a plant for cooling foodstuffs according to the preamble of the main claim.

As known, in the food industry there often arises the need to rapidly bring the foodstuffs (of any kind, for example fruits and vegetables, dairy products, meat, ready-to-eat meals or semi-processed products, etc.) to a temperature sufficiently low to allow the safe storage thereof; for example, in the field of fruits and products derived from harvested fruits (such as grapes) such products are known to be subjected to rapid refrigeration, for example immediately after harvesting.

In particular, there are known plants where foodstuffs in solid pieces (grapes, pizzas, ice-cream, etc.) are subjected to continuous cooling or refrigeration by using cryogenic gases such as CO2 (in atomised liquid form, or, expanding from liquid, in solid form) or nitrogen (in atomised form). A such plant is for example described in US2011/0296853.

US 2020/060318 A1 relates to a method for coating food products with a substance which comprises one or more steps of providing frigories in order to cause crusting of the coating substance around the food products.

For example, in the wine-making industry there are known plants for cooling grapes or crushed grapes which use even considerably large stainless steel tanks in which there are placed the products to be refrigerated or to be cooled and into which there is injected CO2 to obtain the treatment under the desired temperature. These tanks or containers are often significantly large, therefore heavy and cumbersome.

Other plants for cooling, but more frequently for refrigerating or freezing thousands of kilograms of solid food products comprise tunnels which - in the case of mechanical refrigeration - are significantly large. In the case of cryogenic tunnels, such plants are smaller in size, but they can be used for treating solid foodstuffs only.

Generally, such tunnels contain a conveyor belt which conveys such food products while they are impacted by drops of liquid nitrogen emitted by nozzles arranged along the path of the conveyor belt. In both cases (mechanical tunnel or cryogenic tunnel), the plant does not allow to carry out the temperature treatment of liquid products.

An object of the present invention is to provide a plant for cooling foodstuffs or for refrigerating foodstuffs, in particular liquids and/or viscous fluids containing or not containing solid components (such as for example crushed grapes) which is improved with respect to the known plants.

Specifically, an object of the invention is to provide a plant of the type mentioned above that is compact, which can operate continuously (that is without ever stopping for the entire period of time required for the use thereof) and which does not require to pressurise the container in which the foodstuffs are treated.

A further object is to provide a compact plant of the type mentioned above which still allows to cool, in a desired fashion and without causing the freezing thereof, high amounts of food products in liquid and/or viscous form and containing or not containing said solid components.

Another object is to provide a plant where preferably the product is cooled using liquid nitrogen, cryogenic gas which has no negative environmental impact (unlike CO2), and where such gas can be used in low amounts and can also act as protection for the foodstuffs subjected to treatment.

The invention is defined in the independent claim. Preferred embodiments are defined in the dependent claims.

For a better understanding of the present invention, the following drawings are attached hereto, purely by way of non-limiting example, wherein:
figure 1 is a front perspective view of a plant according to the invention;
figure 2 is a perspective view of the plant of figure 1 with some parts in transparency for the sake of greater clarity;
figure 3 is a rear perspective view of the plant of figure 1;
figure 4 is a top view of the plant of figure 1;
figure 5 is a cross-sectional view according to line 5-5 of figure 4;
figure 6 is a perspective view of a detail of the plant of figure 1;
figure 7 is a perspective view of a component of the plant of figure 1;
figure 8 is a front view of the component of figure 7;
figure 9 is a cross-sectional view according to line 9-9 of figure 8;
figure 10 is a front view of a different embodiment of a plant according to the invention;
figure 11 is a lateral view of the plant of figure 10;
figure 12 is a top perspective view of the plant of figure 10;
figure 13 is a cross-sectional view according to line 13-13 of figure 12;
figure 14 is a perspective view of a detail of the plant of figure 10; and
figure 15 is a cross-sectional view according to line 15-15 of figure 14.

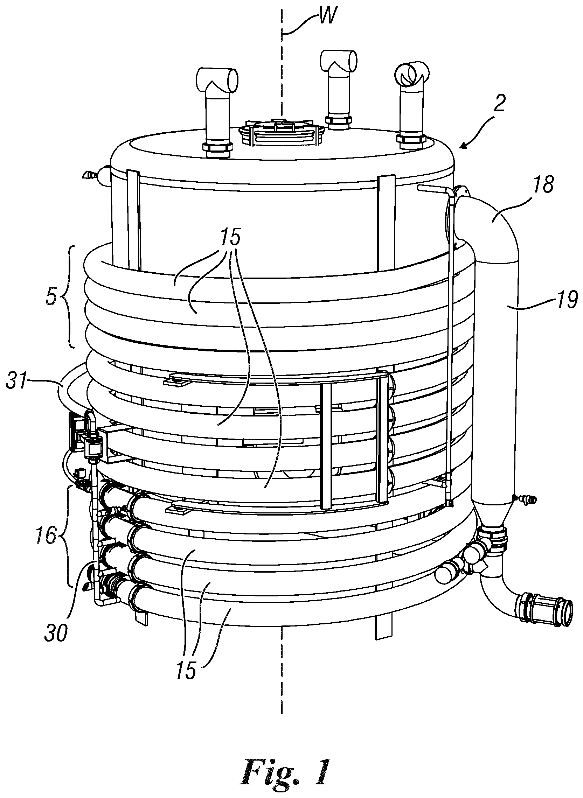

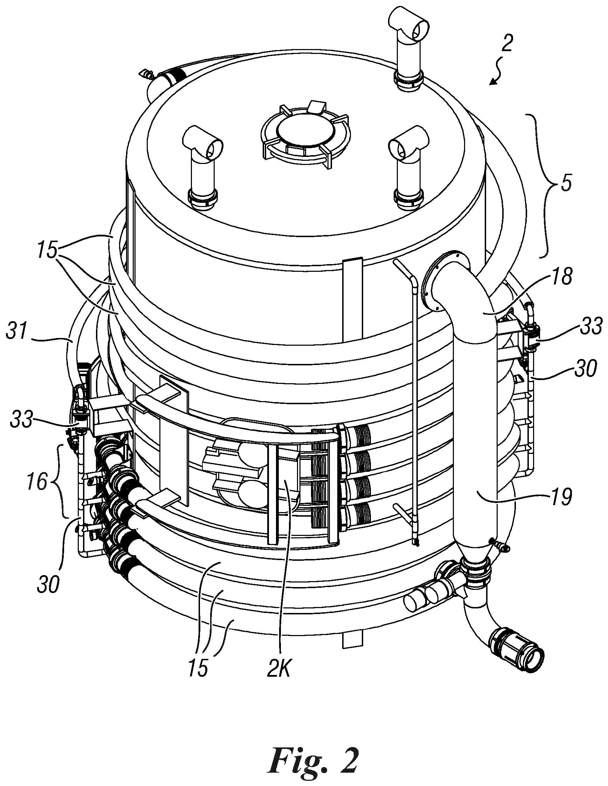

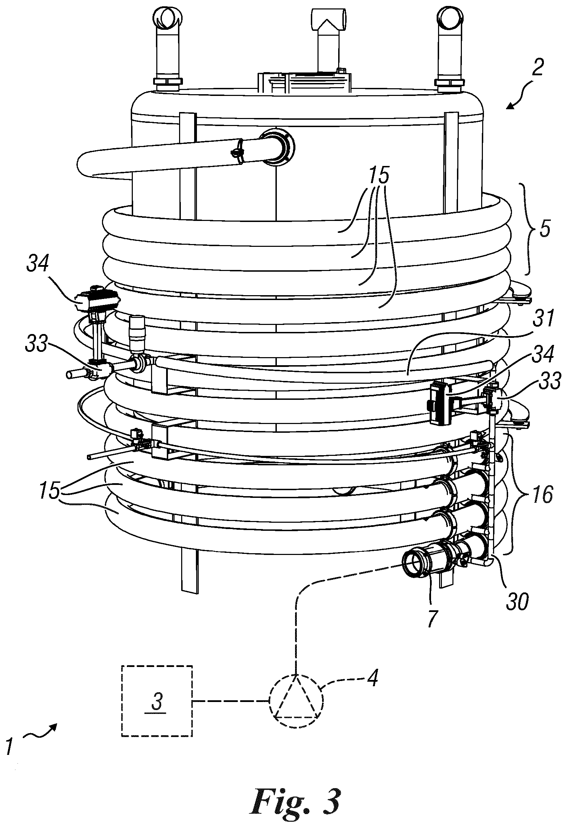

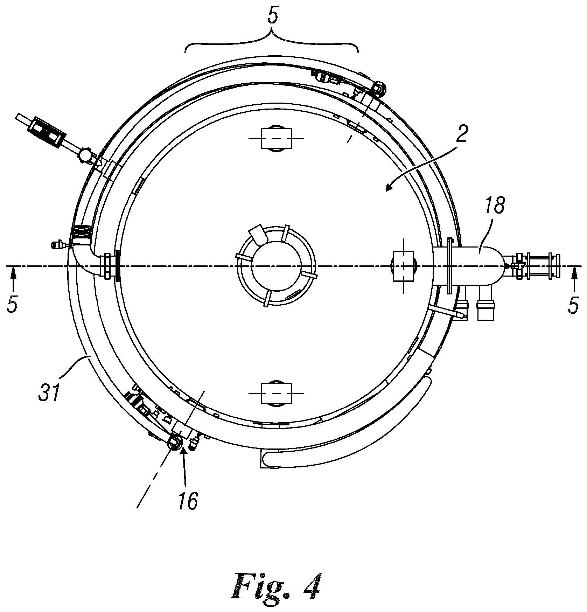

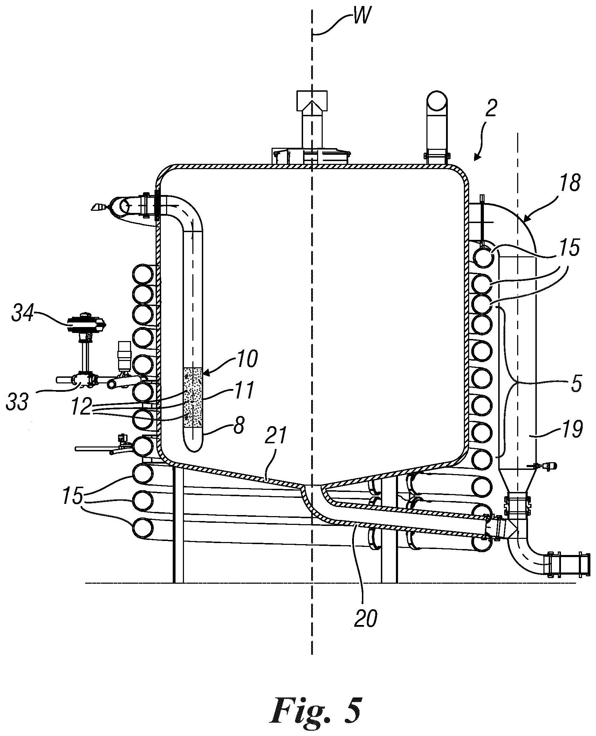

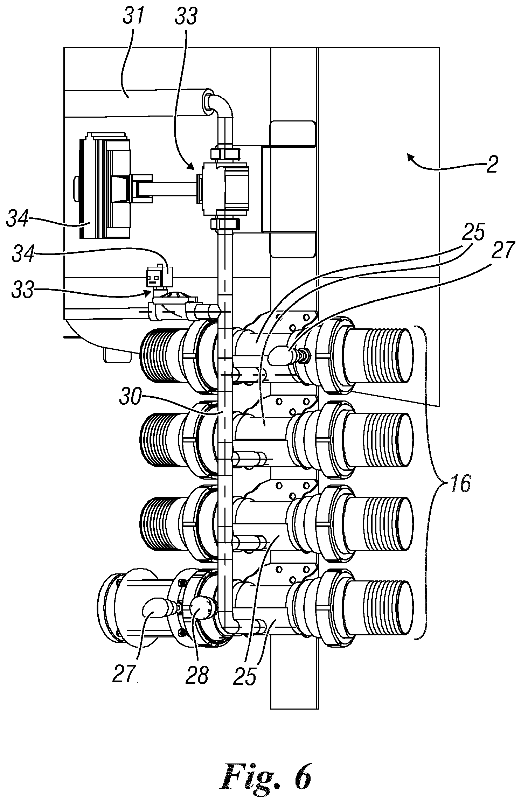

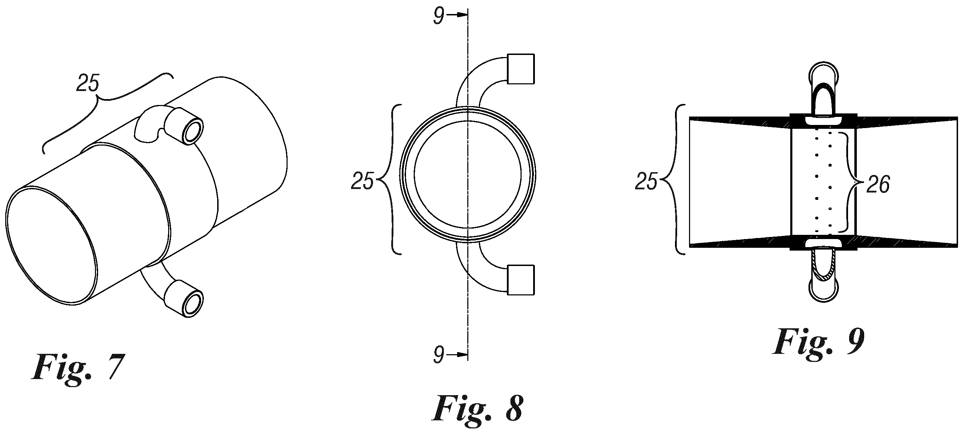

With reference to the aforementioned figures, and, in particular, figures 1-9, the plant subject matter of the invention is generally indicated with 1 (see figure 3). It is suitable to cool (and possibly refrigerate to temperatures close to 0°, but always above zero) liquid foodstuffs or foodstuffs defined by a mixture of solid parts and other liquid parts, such as for example (non-limiting) grapes or crushed grapes comprising both a solid portion and a (most part thereof) liquid portion, or suitable to cool dense fluids.

The plant comprises a container 2 suitable to receive the foodstuffs after the temperature treatment thereof, said container being represented in cylindrical shape (easy to clean) without prejudice to having other shapes. The container may be made of stainless steel or other material suitable to contain partly solid and partly liquid foodstuffs. Such container has a hatch 2K for access to the internal thereof for the cleaning thereof.

The foodstuffs reach the container 2 coming from a tank or other containment element 3 and they are continuously moved by a pump 4 acting as a means for moving the foodstuffs towards the container 2.

The pump directs the foodstuffs into a spiral duct 5 in which the foodstuffs (hereinafter referred to as "product" or "product to be cooled") continuously move towards the container 2. The spiral duct 5 has an inlet end 7, connected to the pump 4 in any known manner, and an outlet end 8 arranged at least at the container from which the product flows out. Preferably, such outlet end 8 is inside the container and it is present at the end of a terminal section 10 of a duct arranged inside the container 2. Due to the reasons which will be described below, the section 10 could also have a portion 11 provided with surface openings 12, as shown in the figures.

The duct 5 has a plurality of turns 15 which are arranged, superimposed but on parallel planes, preferably around the container 2 so that the plant 1 can be small in size. However, the spiral duct 5 may also be separated from the container 2 and for example arranged beside it.

Along the turns 15 of the spiral duct 5 there are arranged liquid nitrogen injectors 16 suitable to introduce this cryogenic liquid gas, into the duct while the product to be cooled moves therein; therefore, during such movement, the product comes into contact with the cryogenic gas and it is cooled continuously.

It should be observed that although the use of liquid nitrogen as the refrigerant (cryogenic) gas is preferred, other cryogenic gases or mixtures thereof, such as for example CO2, may also be used.

As mentioned, the product is pushed into the spiral duct 5 by the pump. The power of the latter together with the expansion of the cryogenic gas in the duct enable the quick movement of the product towards the container 2 which therefore acts as a decanter. In the latter, the product to be cooled (for example grape must) however still receives negative calories from the cryogenic gas (nitrogen for example) and continues the cooling process thereof. Lastly, from the container 2 the cooled product may be extracted through a side discharge pipe 18 (preferably provided with a small tank 19 outside the container) and sent to a further container or tank arranged beside the container 2. The through-flow from one container to the other preferably occurs through communicating vessels, although a pump can be used.

A further discharge duct 20 is arranged at a bottom 21 of the container 2 to allow the full discharge of the container. This duct 20 may be connected to a pump - not shown - although it is not necessary given that the product can be discharged from the container 2 even by gravity.

The cryogenic gas or nitrogen is injected into the spiral duct 5 through injector means 16 arranged on different turns 15 of such duct. In other words, and as shown in the drawings, the injector means 16 are arranged along different sections (the turns 15) of the duct or spiral 5 so as to be arranged at different heights of such duct (with respect to the container 2 if present in such spiral duct).

In the case of the figures, the various injector means 16 are superimposed with respect to each other and lie on adjacent and contiguous turns 15. Obviously, such injector means 16 may also not be superimposed and/or they may be associated with non-consecutive and adjacent turns: in the former case (shown in the figures) the injector means 16 are on the same side of the spiral duct 5 (and of the possible container 2 arranged in such duct); in the latter case, such injector means may be arranged staggered with respect to each other on different sides of the spiral duct 5.

Furthermore, should the spiral duct 5 have a horizontal extension (that is should it have a horizontal and not vertical median longitudinal axis like the one W in the figures), such injector means 16 are arranged at different distances along such median longitudinal axis along adjacent or non-adjacent consecutive turns.

Each of the injector means 16 comprises a sleeve 25 inserted into the spiral duct 5 (which is therefore obtained from various tubular components which define a single path, but which are connected through the sleeves 25 where the injector means 16 are provided for along the duct 5); such sleeve (or injector) 25 comprises a plurality of openings 26 which directly introduce liquid nitrogen into the spiral duct so as to interfere with the product moving therein.

Each sleeve or injector 25 is connected to other parts of the corresponding injector means 16 and supporting sensors, for example temperature 27 and pressure 28 sensors for checking the temperature and pressure present in the duct 5. Furthermore, such injector means are connected to a pipe 30 connected to a duct 31 of the liquid nitrogen which enables to send such cryogenic gas into the spiral duct 5. On such pipe and on the duct of the cryogenic gas 31 there are usually arranged valves 33 controlled by corresponding actuators 34 which, like the entire plant 1, are in turn commanded and controlled by a control unit (not shown) to which there are connected the aforementioned sensors 27 and 28, each present pump (for example the pump 4) and other components for controlling the plant. In particular, as a function of the fluid (liquid or gaseous) which passes through it, such valves 33 are of two per se known types and that is with electric or pneumatic control.

The duct 31 is supplied by cryogenic gas in any known manner.

It should be observed that when liquid nitrogen is not introduced into the spiral duct 5 through the injector means 16, gaseous nitrogen (or other cryogenic fluid in gaseous phase) is alternatively made to flow through the openings 26 so that such openings 26 do not clog the circulating product; therefore, there is alternated the introduction of liquid nitrogen with gaseous nitrogen into the duct 5.

Similarly, the openings 12 of the portion 11 of the section 10 of the spiral duct 5 in the container 2 allow a better diffusion of the gaseous nitrogen present in the spiral duct into the latter, also reducing the "whiplash" which could be perceived if one were to use the outlet end 8 of the duct alone for the outflow of the gas.

The introduction of nitrogen (gaseous by now) into the container 2 also allows to create - therein - an inert and protective environment for the product, cooled by now, present therein.

When using the plant 1, the container 2 is initially empty and the pump 4 moves the product to be cooled (for example grapes or grape must) in the duct or spiral 5 for example by drawing it for example from the tank 3 arranged upstream of a destemmer (not shown) or from the destemmer itself. Once a predetermined period of time has elapsed, after which the product is certainly supplied to the duct or after (in a per se known manner) such product has been detected in the duct, the valves 33 open and liquid nitrogen is introduced into the duct 5 through the injector means 16 (or refrigerant means) which direct the cryogenic gas onto the moving product. The power of the pump together with the expansion of the gas enable a rapid movement of the product towards the container 2.

The nitrogen moves with the product and, given that it cannot exit from the spiral duct 5, it follows it up to the container continuously cooling the product.

It should be observed that the product does not freeze in the spiral duct 5 given that it moves with the nitrogen (or similar cryogenic gas). The cryogenic gas is introduced into the duct 5 in a diffused manner along such duct due to the fact that the injector means 16 are arranged on different turns 15 of the spiral duct 5. Such diffused introduction enables to reduce the amount of cryogenic gas used, therefore reducing the costs for operating the plant 1.

Introducing the cryogenic fluid in different points of the spiral duct enables both the continuous movement of the product and the refrigeration thereof simultaneously.

The speed at which the product moves contributes to preventing the freezing thereof. Such speed obviously depends on the power or capacity of the pump and on the cross-section of the spiral duct 5: the first experimental tests showed that a speed of the product comprised between 0.1 and 5 m/s, preferably between 0.25 and 0.5 m/s and advantageously between 0.28 and 0.40 m/s enables to prevent the product from freezing.

For example, a duct having a cross-section measuring 100 mm, a pump having a capacity of 100 q/h and a power frequency of the inverter connected to such pump equal to 50 Hz, enables to obtain a speed of the product amounting to about 0.35 m/s which however prevents the product from freezing and solidifying.

After filling the container 2 with the refrigerated product, the product flows into the duct 18 due to the communicating vessels effect and it can be collected in another tank/container. Therefore, the invention does not use compressed air to move the product and the shape of the duct (spiral-like) enables an optimal cooling of the product. As a matter of fact, the spiral duct is longer than the occupied space and it contributes to keeping the product and the cryogenic gas in contact for a long period of time. Furthermore, the configuration of the duct contributes to avoiding the presence of corners therein, where the foodstuffs could cease the movement thereof.

Furthermore, in order to avoid excessive concentration of cold in the duct 5, besides the continuous movement of the product at a speed deemed optimal, the injectors 16 are advantageously activated intermittently with respect to each other.

The invention allows to obtain a refrigeration of a product or of liquid foodstuffs, or in viscous fluid phase containing or not containing solid components, by means of a compact plant that is easy to build and use. The plant of the invention preferably uses liquid nitrogen, an almost zero-environmental impact cryogenic gas.

The shape of the part of the plant where the product and nitrogen reach and remain in contact (that is the spiral duct) and the diffusion of the points of the duct 5 in which nitrogen is introduced into the duct, enables to obtain a high thermal exchange time between the cryogenic fluid and the product and therefore a high efficiency of the process. Furthermore, this can be obtained with low amounts of cryogenic gas without prejudice to obtaining, at the outlet of the duct in the container 2, temperatures of the product up to and beyond 10°C and in particular at least amounting to 7-8°C below the temperature of the product at the inlet of the spiral duct.

Furthermore, the plant is not pressurised, and this facilitates the construction thereof and it can operate continuously. Furthermore, the use of nitrogen enables to create an inert environment in the container 2 and the spiral duct.

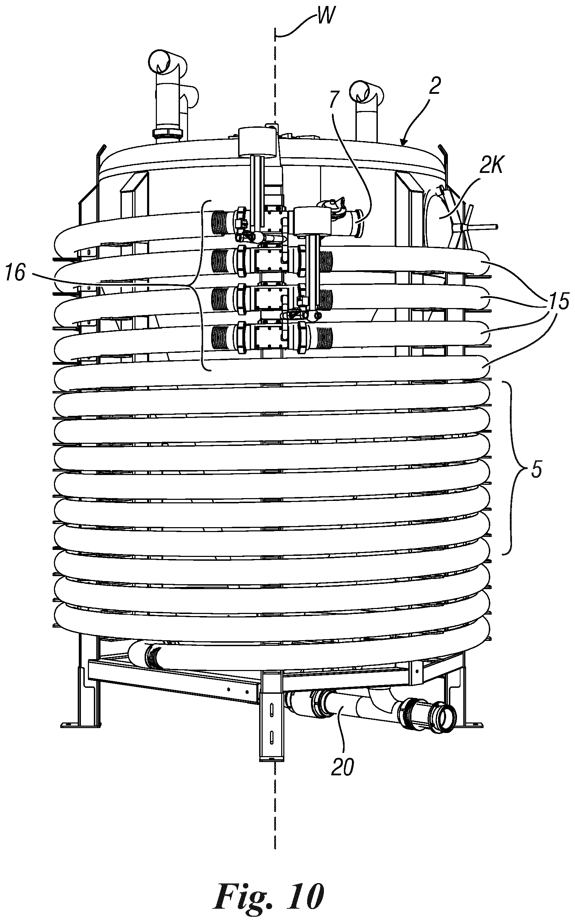

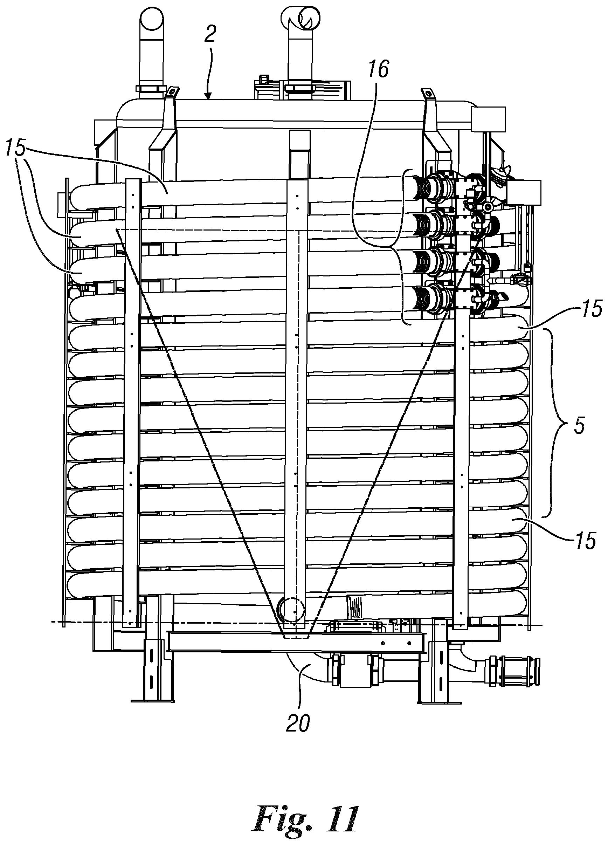

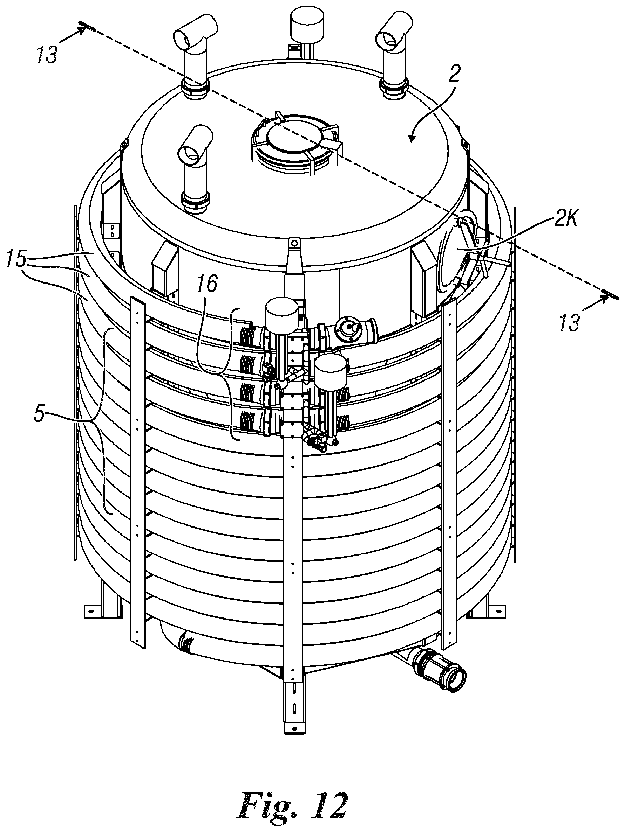

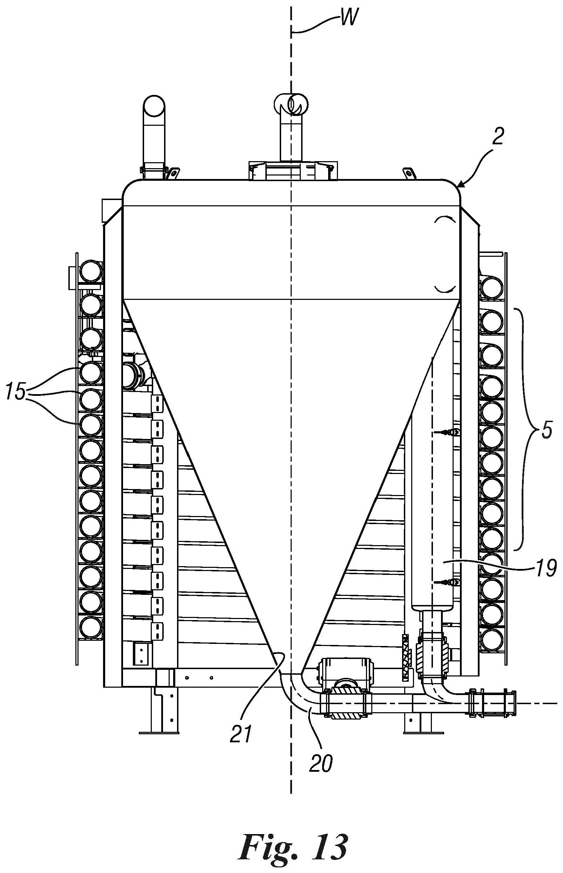

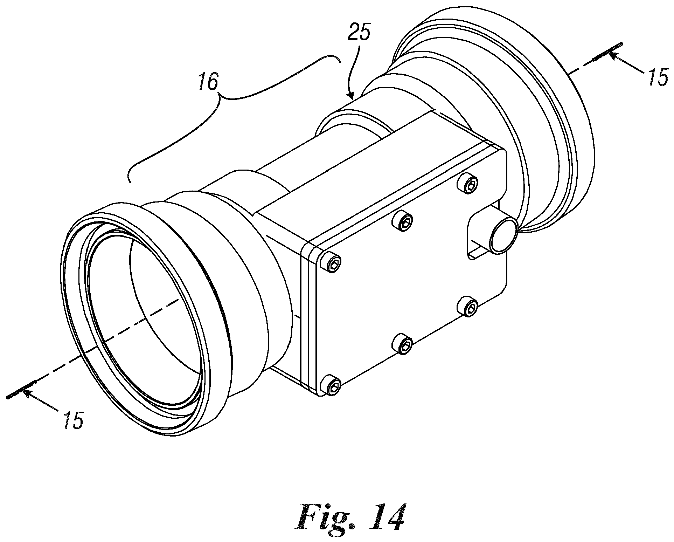

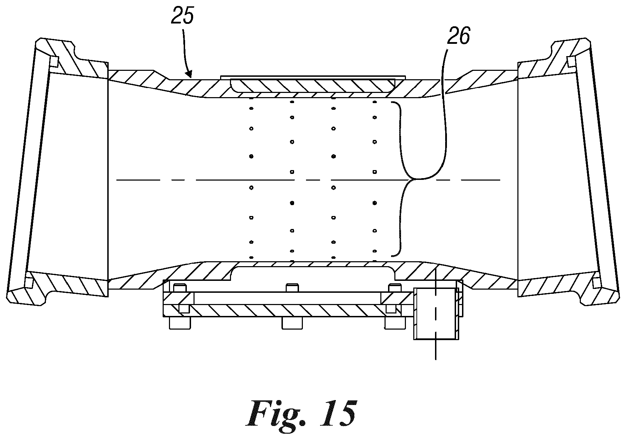

Figures 10-15 show a different embodiment of the plant 1. In such figures, where parts corresponding to those of the previously described figures are indicated using the same reference numerals, the spiral duct 5 is still arranged around the container 2, but the refrigerated product is introduced at the bottom 21 of such container and it protrudes from the discharge duct 18 when said container reaches an appropriate filling level.

The container 2 is always emptied by the duct 20 once the introduction of the refrigerated product has terminated.

It should also be observed that the injector means 16 are arranged at a higher level of the spiral duct 5 with respect to the position in which the injector means 16 are arranged in the solution of figures 1-9.

Furthermore, in the solution of figures 10-15 the valves which allow to introduce cryogenic fluid into the spiral duct 5 are like the ones described in WO2018172627.

Also the plant 1 in the embodiment of figures 10-15 has the injector means 16 distributed on multiple turns 15 of the spiral duct 5 and it therefore has the advantages outlined in the description of the plant shown in figures 1-9.

Various preferred embodiments of the invention have been described. However, others can still be obtained based on the description above and according to the teaching of the claims below which define the scope of protection of the invention.

## Claims

1. Plant (1) for continuously cooling foodstuffs comprising a container (2) suitable to receive foodstuffs continuously moved by a movement member (4) and refrigerant means (16) for cooling such foodstuffs when moving them, the movement member being a pump (4), wherein the plant comprises a spiral duct (5) wherein said pump (4) continuously directs and moves the foodstuffs to be cooled, along said spiral duct (5) there being arranged refrigerant means (16) which direct a cryogenic liquid gas into the spiral duct and on the continuously moving foodstuffs, such spiral duct having an inlet end (7) which receives the foodstuffs and an outlet end (8) at the aforementioned container (2), said foodstuffs remaining at contact with said cryogenic gas in the spiral duct (5) up to the inlet in the container (2), said spiral duct comprising a plurality of turns (15) arranged superimposed on parallel planes, said refrigerant means comprising injector means (16) suitable to introduce the cryogenic liquid gas into the spiral duct (5) so that it comes into contact with the moving foodstuffs, said injector means (16) being arranged on a plurality of consecutive turns (15) of said spiral duct (5).

2. Plant according to claim 1, **characterised in that** said spiral duct (5) has an alternatively vertical or horizontal median longitudinal axis (W).

3. Plant according to claim 2, **characterised in that** said injector means (16) are associated with different turns (15) of the spiral duct consecutively arranged along a median longitudinal axis (W) of the spiral duct (5), said injector means (16) being arranged parallel to such median longitudinal axis (W) and consecutively to each other.

4. Plant according to claim 2, **characterised in that** said injector means (16) are associated with different turns (15) of the spiral duct (5) consecutively arranged along a median longitudinal axis (W) of said the spiral duct (5), said injector means (16) being arranged parallel to such median longitudinal axis (W) but being staggered with respect to each other.

5. Plant according to claim 1, **characterised in that** the spiral duct (5) is arranged around the container (2).

6. Plant according to claim 1, **characterised in that** the cryogenic gas is liquid nitrogen.

7. Plant according to claim 1, **characterised in that** said injector means (16) are connected through a pipe (30) to a duct (31) for cryogenic liquid gas.

8. Plant according to claim 1, **characterised in that** said injector means (16) comprise a sleeve (25) arranged along the spiral duct(5) and having a plurality of openings (26) for introducing the cryogenic gas into said spiral duct (5).

9. Plant according to claim 4, **characterised in that** it comprises valve means (33) for controlling the sending of the cryogenic liquid gas to the spiral duct (5), there being provided for temperature and pressure sensors (27, 28) to control such temperature and pressure in the spiral duct (5), said sensors (27, 28) being connected to a control unit of the plant (1).

10. Plant according to claims 4 and 9, **characterised in that** said valve means are controlled by actuators (34) in turn connected to the control unit of the plant.

11. Plant according to claim 8, **characterised in that** the plurality of openings (26) for the introduction of the cryogenic liquid gas into the spiral duct (5) are alternatively traversed by cryogenic gas in gaseous phase and by cryogenic gas in liquid phase.

12. Plant according to claim 1, **characterised in that** the spiral duct (5) terminates in the container with a section (10) thereof, along such section there being provided for a portion (11) provided with openings (12) for the outflow of cryogenic gas in gaseous phase into said container (2) .

13. Plant according to claim 1, **characterised in that** the moving foodstuffs in the spiral duct (5) have a speed comprised between 0.1 m/s and 5 m/s, preferably between 0.25 m/s and 0.5 m/s, advantageously between 0.28 m/s and 0.40 m/s, said speed preventing the foodstuffs from freezing in the spiral duct.

## Patentansprüche

1. Anlage (1) zum kontinuierlichen Kühlen von Lebensmitteln, umfassend einen Behälter (2), der zum Aufnehmen von Lebensmitteln geeignet ist, die kontinuierlich durch ein Bewegungselement (4) bewegt werden, und Kältemitteleinrichtungen (16) zum Kühlen dieser Lebensmittel bei ihrer Bewegung, das Bewegungselement eine Pumpe (4) ist, wobei die Anlage einen spiralförmigen Kanal (5) umfasst,
wobei die Pumpe (4) die zu kühlenden Lebensmittel kontinuierlich entlang des spiralförmigen Kanals (5) leitet und bewegt, Kältemitteleinrichtungen (16) angeordnet sind, die ein kryogenes Flüssiggas in den spiralförmigen Kanal und auf die sich kontinuierlich bewegenden Lebensmittel leiten, der spiralförmige Kanal ein Einlassende (7), das die Lebensmittel aufnimmt, und ein Auslassende (8) an dem Behälter (2) aufweist, wobei die Lebensmittel in dem spiralförmigen Kanal (5) bis zu dem Einlass in den Behälter (2) in Kontakt mit dem kryogenen Gas bleiben, der spiralförmige Kanal umfassend eine Vielzahl von Windungen (15), die in parallelen Ebenen übereinander angeordnet sind, die Kältemitteleinrichtungen umfassend Einspritzeinrichtungen (16), die ausgelegt sind, um das kryogene Flüssiggas in den spiralförmigen Kanal (5) einzuleiten, sodass es mit den sich bewegenden Lebensmitteln in Kontakt kommt, die Einspritzeinrichtungen (16) an einer Vielzahl von aufeinanderfolgenden Windungen (15) des spiralförmigen Kanals (5) angeordnet sind.

2. Anlage nach Anspruch 1, **dadurch gekennzeichnet, dass** der spiralförmige Kanal (5) eine abwechselnd vertikale oder horizontale mittlere Längsachse (W) aufweist.

3. Anlage nach Anspruch 2, **dadurch gekennzeichnet, dass** die Einspritzeinrichtungen (16) mit verschiedenen Windungen (15) des spiralförmigen Kanals assoziiert sind, die nacheinander entlang einer mittleren Längsachse (W) des spiralförmigen Kanals (5) angeordnet sind, wobei die Einspritzeinrichtungen (16) parallel zu dieser mittleren Längsachse (W) und nacheinander in Bezug aufeinander angeordnet sind.

4. Anlage nach Anspruch 2, **dadurch gekennzeichnet, dass** die Einspritzeinrichtungen (16) mit verschiedenen Windungen (15) des spiralförmigen Kanals (5) assoziiert sind, die nacheinander entlang einer mittleren Längsachse (W) des spiralförmigen Kanals (5) angeordnet sind, wobei die Einspritzeinrichtungen (16) zwar parallel zu dieser mittleren Längsachse (W) angeordnet sind, jedoch zueinander versetzt sind.

5. Anlage nach Anspruch 1, **dadurch gekennzeichnet, dass** der spiralförmige Kanal (5) um den Behälter (2) angeordnet ist.

6. Anlage nach Anspruch 1, **dadurch gekennzeichnet, dass** das kryogene Gas flüssiger Stickstoff ist.

7. Anlage nach Anspruch 1, **dadurch gekennzeichnet, dass** die Einspritzeinrichtungen (16) über ein Rohr (30) mit einem Kanal (31) für kryogenes Flüssiggas verbunden sind.

8. Anlage nach Anspruch 1, **dadurch gekennzeichnet, dass** die Einspritzeinrichtungen (16) eine Hülse (25) umfassen, die entlang des spiralförmigen Kanals (5) angeordnet ist und eine Vielzahl von Öffnungen (26) zum Einleiten des kryogenen Gases in den spiralförmigen Kanal (5) aufweist.

9. Anlage nach Anspruch 4, **dadurch gekennzeichnet, dass** sie Ventileinrichtungen (33) zum Steuern des Zuleitens des kryogenen Flüssiggases zu dem spiralförmigen Kanal (5) umfasst, wobei Temperatur- und Drucksensoren (27, 28) zum Überwachung dieser Temperatur und dieses Drucks in spiralförmigen Kanal (5) bereitgestellt sind, wobei die Sensoren (27, 28) mit einer Steuereinheit der Anlage (1) verbunden sind.

10. Anlage nach den Ansprüchen 4 und 9, **dadurch gekennzeichnet, dass** die Ventileinrichtungen durch Aktuatoren (34) gesteuert werden, die wiederum mit der Steuereinheit der Anlage verbunden sind.

11. Anlage nach Anspruch 8, **dadurch gekennzeichnet, dass** die Vielzahl von Öffnungen (26) zum Einleiten des kryogenen Flüssiggases in den spiralförmigen Kanal (5) abwechselnd von kryogenem Gas in Gasphase und von kryogenem Gas in Flüssigphase durchströmt werden.

12. Anlage nach Anspruch 1, **dadurch gekennzeichnet, dass** der spiralförmigen Kanal (5) in dem Behälter mit einem Bereich (10) davon endet, wobei entlang dieses Bereichs ein Abschnitt (11) bereitgestellt ist, der mit Öffnungen (12) zum Ausströmen von kryogenem Gas in Gasphase in den Behälter (2) versehen ist.

13. Anlage nach Anspruch 1, **dadurch gekennzeichnet, dass** die sich in dem spiralförmigen Kanal (5) bewegenden Lebensmittel eine Geschwindigkeit zwischen 0,1 m/s und 5 m/s, vorzugsweise zwischen 0,25 m/s und 0,5 m/s, vorteilhafterweise zwischen 0,28 m/s und 0,40 m/s aufweisen, wobei diese Geschwindigkeit verhindert, dass die Lebensmittel in dem spiralförmigen Kanal gefrieren.

## Revendications

1. Installation (1) destinée au refroidissement continu de denrées alimentaires, comprenant un récipient (2) adapté pour recevoir des denrées alimentaires déplacées en continu par un dispositif de déplacement (4) et un moyen réfrigérant (16) destiné à refroidir ces denrées alimentaires pendant leur déplacement, le dispositif de déplacement étant une pompe (4), dans laquelle l'installation comprend un conduit en spirale (5)
dans laquelle ladite pompe (4) dirige et déplace de manière continue les denrées alimentaires à refroidir, le long dudit conduit en spirale (5) sont disposés des moyens réfrigérants (16) qui dirigent un gaz liquide cryogénique dans le conduit en spirale et sur les denrées alimentaires qui se déplacent de manière continue, ce conduit en spirale ayant une extrémité d'entrée (7) qui reçoit les denrées alimentaires et une extrémité de sortie (8) au niveau du récipient susmentionné (2), lesdites denrées alimentaires restant en contact avec ledit gaz cryogénique dans le conduit en spirale (5) jusqu'à l'entrée dans le récipient (2), ledit conduit en spirale comprenant une pluralité de tours (15) disposés de manière superposée sur des plans parallèles, lesdits moyens réfrigérants comprenant des moyens d'injection (16) adaptés pour introduire le gaz liquide cryogénique dans le conduit en spirale (5) de manière à ce qu'il entre en contact avec les denrées alimentaires en mouvement, lesdits moyens d'injection (16) étant disposés sur une pluralité de tours consécutifs (15) dudit conduit en spirale (5).

2. Installation selon la revendication 1, **caractérisée en ce que** ledit conduit en spirale (5) présente un axe longitudinal médian (W) qui peut être vertical ou horizontal.

3. Installation selon la revendication 2, **caractérisée en ce que** lesdits moyens d'injection (16) sont associés à différents tours (15) du conduit en spirale disposés successivement le long d'un axe longitudinal médian (W) du conduit en spirale (5), lesdits moyens d'injection (16) étant disposés de manière parallèle à cet axe longitudinal médian (W) et successivement les uns par rapport aux autres.

4. Installation selon la revendication 2, **caractérisée en ce que** lesdits moyens d'injection (16) sont associés à différents tours (15) du conduit en spirale disposés successivement le long d'un axe longitudinal médian (W) du conduit en spirale (5), lesdits moyens d'injection (16) étant disposés de manière parallèle à cet axe longitudinal médian (W) mais en décalage les uns par rapport aux autres.

5. Installation selon la revendication 1, **caractérisée en ce que** le conduit en spirale (5) est disposé autour du récipient (2).

6. Installation selon la revendication 1, **caractérisée en ce que** le gaz cryogénique est de l'azote liquide.

7. Installation selon la revendication 1, **caractérisée en ce que** lesdits moyens d'injection (16) sont mis en communication par l'intermédiaire d'un tuyau (30) avec un conduit (31) pour gaz liquéfié cryogénique.

8. Installation selon la revendication 1, **caractérisée en ce que** lesdits moyens d'injection (16) comprennent un manchon (25) disposé le long du conduit en spirale (5) et comportant une pluralité d'ouvertures (26) servant à introduire le gaz cryogénique dans ledit conduit en spirale (5).

9. Installation selon la revendication 4, **caractérisée en ce qu'**elle comprend des vannes (33) permettant de contrôler l'envoi du gaz liquéfié cryogénique vers le conduit en spirale (5), des capteurs de température et de pression (27, 28) étant prévus pour contrôler ladite température et ladite pression dans le conduit en spirale (5), lesdits capteurs (27, 28) étant connectés à une unité de commande de l'installation (1).

10. Installation selon les revendications 4 et 9, **caractérisée en ce que** lesdites vannes sont commandées par des actionneurs (34) reliés à leur tour à l'unité de commande de l'installation.

11. Installation selon la revendication 8, **caractérisée en ce que** la pluralité d'ouvertures (26) servant à l'introduction du gaz liquéfié cryogénique dans le conduit en spirale (5) sont traversées tour à tour par du gaz cryogénique en phase gazeuse et par du gaz cryogénique en phase liquide.

12. Installation selon la revendication 1, **caractérisée en ce que** le conduit en spirale (5) débouche dans le conteneur par une section (10) de celui-ci, une partie (11) de cette section comprenant des ouvertures (12) servant à l'écoulement du gaz cryogénique en phase gazeuse dans ledit conteneur (2).

13. Installation selon la revendication 1, **caractérisée en ce que** les denrées alimentaires en mouvement dans le conduit en spirale (5) se déplacent à une vitesse comprise entre 0,1 m/s et 5 m/s, de préférence entre 0,25 m/s et 0,5 m/s, avantageusement entre 0,28 m/s et 0,40 m/s, ladite vitesse empêchant les denrées alimentaires de geler dans le conduit en spirale.
